**Europäisches Patentamt**

**European Patent Office**

**Office européen des brevets**

(19)

(11) Numéro de publication : **0 376 860 B1**

# FASCICULE DE BREVET EUROPEEN

(12)

(45) Date de publication du fascicule du brevet :
**26.02.92 Bulletin 92/09**

(51) Int. Cl.$^5$ : **F16B 45/00,** F16B 45/02,
A63B 29/00

(21) Numéro de dépôt : **89420488.2**

(22) Date de dépôt : **12.12.89**

(54) **Mousqueton de sécurité à indicateur de la position de la bague de verrouillage.**

(30) Priorité : **29.12.88 FR 8817555**

(43) Date de publication de la demande :
**04.07.90 Bulletin 90/27**

(45) Mention de la délivrance du brevet :
**26.02.92 Bulletin 92/09**

(84) Etats contractants désignés :
**DE ES GB IT**

(56) Documents cités :
**FR-A- 2 442 996**

(56) Documents cités :
**FR-A- 2 476 249**
**US-A- 1 448 610**
**US-A- 4 401 333**
**US-A- 4 539 732**

(73) Titulaire : **PETZL S.A.**
**Cidex 105 A ZI de Crolles**
**F-38190 Brignoud (FR)**

(72) Inventeur : **Petzl, Pierre**
**Zi De Crolles**
**F-38190 Brignoud (FR)**
Inventeur : **Petzl, Paul**
**Zi De Crolles**
**F-38190 Brignoud (FR)**

EP 0 376 860 B1

Jouve, 18, rue Saint-Denis, 75001 PARIS

## Description

L'invention est relative à un mousqueton comportant un corps métallique en forme de boucle ouverte, un doigt de fermeture monté à pivotement sur un axe d'articulation situé à l'une des extrémités du corps, un ressort de rappel sollicitant le doigt en engagement avec l'extrémité opposée du corps pour fermer la boucle, et une bague de verrouillage déplaçable sur le doigt pour occuper soit une position inactive autorisant le pivotement du doigt vers l'intérieur de la boucle pour ouvrir la boucle du mousqueton et une position active de blocage du doigt pour verrouiller le mousqueton en position fermée, le passage de la position inactive à la position active, et réciproquement, s'effectuant par une commande manuelle de déplacement de la bague.

Selon un mousqueton connu décrit dans le document FR-A 2442 996, il est indispensable de vérifier par un test manuel, le blocage du doigt pivotant par la bague de verrouillage. Cette opération du test est pratiquée par la plupart des utilisateurs ayant l'instinct de sécurité, et s'opère au dernier moment, par exemple avant le départ de l'escalade, ou de la descente d'un puits. Le test de sécurité s'effectue par une pression manuelle partie prédéterminée à l'extérieur du doigt. Le test est positif en cas d'inhibition du déplacement du doigt vers l'intérieur de la boucle, ce qui prouve que la bague de verrouillage se trouve en position active. Cette action manuelle de vérification de la sécurité du mousqueton nécessite un certain temps, et n'est pas toujours facile à réaliser, notamment lorsque l'utilisateur a des moufles. Certains arrivent alors à oublier la pratique du test, ce qui va au détriment de la sécurité, car le doigt peut ne pas être verrouillé par la bague.

L'objet de l'invention consiste à réaliser un mousqueton à sécurité positive ne nécessitant pas de test manuel de l'état de verrouillage du doigt.

Le mousqueton selon l'invention est caractérisé en ce que le mousqueton comporte un dispositif de visualisation de l'état verrouillé ou non verrouillé du doigt de fermeture, comportant un premier repère formé par un revêtement coloré agencé pour être visible en position inactive de la bague de verrouillage, et invisible en position active de ladite bague, et que ledit premier repère recouvre partiellement les branches latérales du doigt à l'opposé de l'axe d'articulation de manière à être automatiquement caché par la bague lors de son passage vers la position active. Le test s'effectue alors visuellement sans aucune perte de temps. L'apparition du premier repère indique clairement l'état de déblocage du doigt, tandis que sa disparition par recouvrement de la bague signale sans ambiguïté l'état de blocage positif du doigt.

Le dispositif de visualisation peut être pourvu d'un deuxième repère agencé pour être visible en position active de la bague de verrouillage, et invisible en position inactive de ladite bague.

Chaque repère peut être réalisé au moyen d'un revêtement approprié, notamment de peinture, sur le doigt de verrouillage. La couleur du premier repère est choisie différente de celle du doigt et/ou du deuxième repère.

D'autres avantages et caractéristiques ressortiront plus clairement de la description qui va suivre de deux modes de réalisation de l'invention, donnés à titre d'exemples non limitatifs, et représentés aux dessins annexés, dans lesquels :

– la figure 1 est une vue en élévation d'un mousqueton selon l'invention, en position inactive de la bague de verrouillage ;

– la figure 2 représente une vue identique du mousqueton de la figure 1, en position active de la bague de verrouillage ;

– la figure 3 est une vue identique de la figure 1 d'une variante de réalisation, la bague étant en position inactive ;

– la figure 4 montre une vue identique du mousqueton de la figure 3, en position active de la bague de verrouillage.

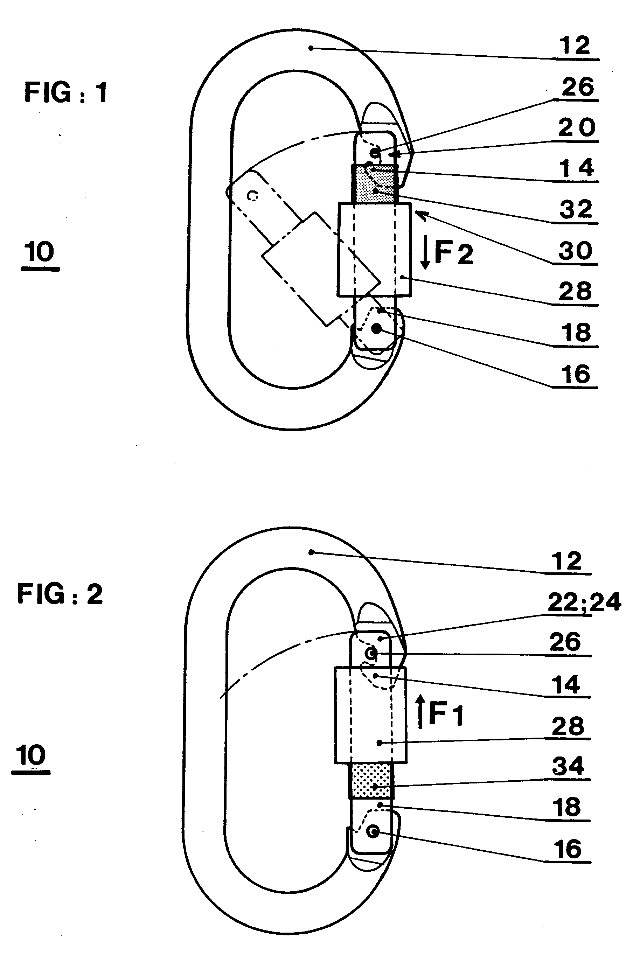

Sur les figures 1 et 2, un mousqueton 10 comporte un corps 12 métallique en forme de C constituant une boucle ouverte. L'une des extrémités du corps 12 est dotée d'un ergot d'accrochage 14 orienté vers l'intérieur de la boucle. L'autre extrémité du corps 12 comprend un axe 16 d'articulation, autour duquel peut pivoter un doigt 18 de fermeture de la boucle. A l'opposé de l'axe 16, le bout libre du doigt 18 présente une rainure 20 en forme de U, délimitée par deux branches latérales 22,24, réunies entre elles par une entretoise 26 de retenue, s'étendant parallèlement à l'axe d'articulation 16. L'ouverture de la boucle du mousqueton 10 s'effectue par pivotement du doigt 18 vers l'intérieur.

En position de fermeture du doigt 18 pivotant, l'ergot d'accrochage 14 se trouve inséré dans la rainure 20, et l'entretoise 26 est en butée contre le fond de l'ergot 14.

Un ressort de rappel (non représenté) est intégré à la base du doigt 18 au voisinage de l'axe 16, pour solliciter le doigt 18 pivotant vers la position de fermeture.

Le doigt 18 pivotant du mousqueton 10 est équipé d'une bague de verrouillage 28 susceptible d'occuper une position inactive (fig.1) autorisant l'ouverture du mousqueton 10, et une position active (fig.2) de blocage du doigt 18 dans l'ergot d'accrochage 14. Le passage de la position inactive vers la position active (voir flèche F1, fig.2) et vice versa (voir flèche F2, fig.1), s'effectue par une action manuelle de vissage ou de coulissement, provoquant le déplacement en translation de la bague 28, respectivement vers l'ergot d'accrochage 14, et en sens opposé vers l'axe d'articulation 16.

Le fonctionnement d'un tel mousqueton 10 à bague de verrouillage 28 est bien connu des spécialistes, et il suffit de rappeler que l'ouverture du mousqueton 10 par pivotement du doigt 18 vers l'intérieur de la boucle, est rendue impossible lorsque la bague de verrouillage 28 se trouve en position active.

Selon l'invention, le doigt 18 pivotant comporte un dispositif de visualisation de la position de la bague de verrouillage 28. Ce dispositif de visualisation 30 est formé par un premier repère 32 coloré, notamment en rouge, qui recouvre partiellement les branches latérales 22,24 du doigt 18.

En position inactive de la bague de verrouillage 28 (fig.1), la visualisation directe du premier repère 32 indique clairement l'état de déblocage du doigt 18, lequel peut pivoter librement vers l'intérieur pour ouvrir la boucle.

En position active de la bague 28 (fig.2), le premier repère 32 est rendu invisible par le recouvrement de la bague 28 sur l'ergot d'accrochage 14 du corps 12. L'effacement du premier repère 32 indique sans ambiguïté l'état de blocage positif du doigt 18 par la bague de verrouillage 28. Il est alors inutile de tester manuellement l'état de verrouillage du mousqueton 10.

Le dispositif de visualisation 30 peut encore comporter un deuxième repère 34 coloré, notamment en vert, situé sur le doigt 18 à l'opposé du premier repère 32. Ce deuxième repère 34 est visible lorsque la bague de verrouillage 28 se trouve en position active (fig.2), et invisible lorsque la bague 28 est en position inactive (fig.1).

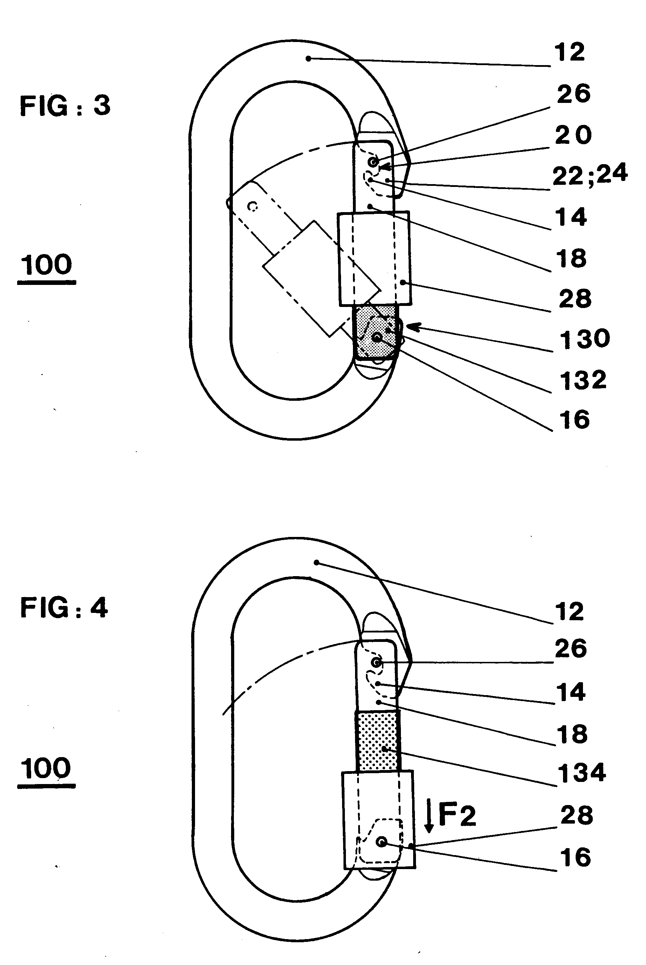

Selon la variante de mousqueton 100 des figures 3 et 4, les mêmes numéros de repères seront utilisés pour désigner des pièces identiques à celles des figures 1 et 2. Le déplacement de la bague de verrouillage 28 vers la position active s'opère dans le sens de la flèche F2 (voir fig.4) jusqu'à l'axe d'articulation 16. Le premier repère 132 en rouge du dispositif de visualisation 130 est disposé au voisinage de l'axe d'articulation 16, de manière à être visible lorsque la bague de verrouillage 28 se trouve en position inactive (fig.3). Le deuxième repère 134 coloré en vert est alors invisible.

Le verrouillage du mousqueton 100 s'effectue par blocage de l'axe d'articulation 16 au moyen de la bague 28 (fig.4). Il en résulte la disparition du premier repère 132 rouge, et l'apparition du deuxième repère 134 vert.

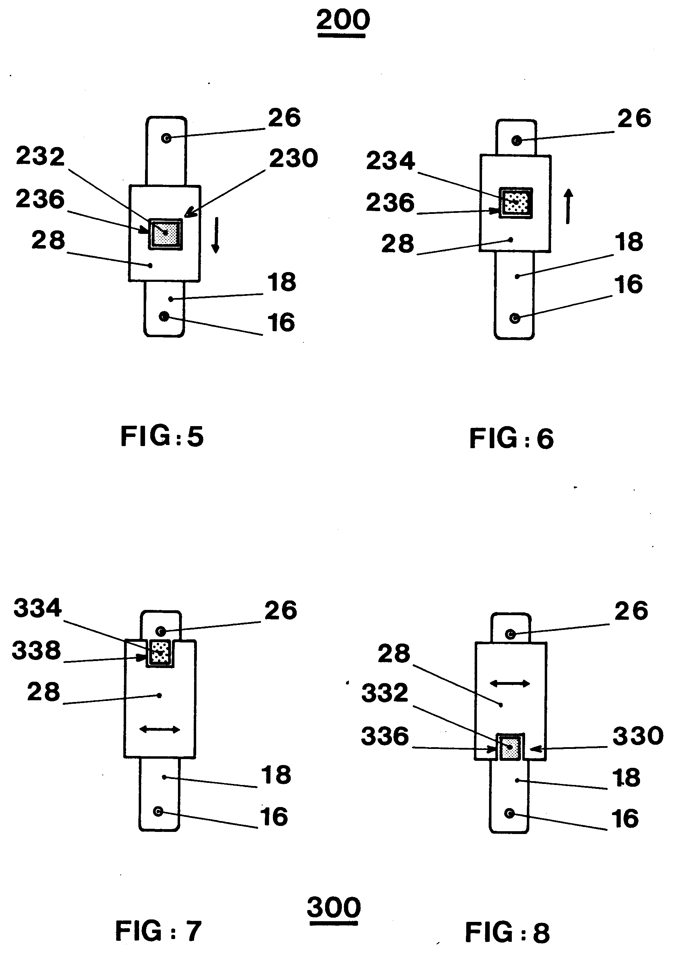

Selon la variante des figures 5 et 6, les deux repères 232,234 du mousqueton 200 sont visibles à travers une fenêtre 236 ménagée dans la zone médiane de la bague 28, laquelle est déplaçable en translation.

Dans la variante des figures 7 et 8, deux fenêtres 336,338 sont formées par deux encoches semi-ouvertes décalées angulairement aux extrémités frontales opposées de la bague 28, laquelle est déplaçable en rotation.

Le dispositif de visualisation 30,130,230,330 selon l'invention peut être utilisé sur tout autre type de mousqueton à bague de verrouillage, notamment à vis ou à baïonnette, pour la pratique de l'escalade, alpinisme, spéléologie, nautisme et chantiers de construction.

## Revendications

1. Mousqueton comportant un corps (12) métallique en forme de boucle ouverte, un doigt (18) de fermeture monté à pivotement sur un axe (16) d'articulation situé à l'une des extrémités du corps (12) un ressort de rappel sollicitant le doigt (18) en engagement avec l'extrémité opposée du corps (12) pour fermer la boucle, et une bague (28) de verrouillage déplaçable sur le doigt (18) pour occuper soit une position inactive autorisant le pivotement du doigt (18) vers l'intérieur de la boucle pour ouvrir la boucle du mousqueton (10, 100, 200, 300) et une position active de blocage du doigt (18) pour verrouiller le mousqueton en position fermée, le passage de la position inactive à la position active, et réciproquement, s'effectuant par une commande manuelle de déplacement de la bague (28), caractérisé en ce que le mousqueton (10, 100, 200, 300) comporte un dispositif de visualisation (30, 130, 230, 330) de l'état verrouillé ou non verrouillé du doigt (18) de fermeture, comportant un premier repère (32, 132, 232, 332) formé par un revêtement coloré agencé pour être visible en position inactive de la bague de verrouillage (28) et invisible en position active de ladite bague, et que ledit premier repère (32, 132, 232, 332) recouvre partiellement les branches latérales du doigt (18) à l'opposé de l'axe d'articulation (16) de manière à être automatiquement caché par la bague (28) lors de son passage vers la position active.

2. Mousqueton selon la revendication 1, caractérisé en ce que le dispositif de visualisation (30, 130, 230, 330) est pourvu d'un deuxième repère (34, 134, 234, 334) agencé pour être visible en position active de la bague de verrouilage (28), et invisible en position inactive de ladite bague.

3. Mousqueton selon la revendication 2, caractérisé en ce que le deuxième repère (34, 134) est situé dans la zone médiane du doigt (18) entre l'axe d'articulation (16) et l'extrémité opposée du doigt (18).

4. Mousqueton selon la revendication 2 ou 3, caractérisé en ce que la couleur du revêtement constituant le premier repère (32, 132, 232, 332) est différente de celle du doigt (18) et/ou du deuxième repère (34, 134, 234, 334).

5. Mousqueton selon la revendication 1 ou 2, caractérisé en ce que chaque repère (232, 234, 332, 334) du dispositif de visualisation (200, 300) est visible à travers une fenêtre (236, 336, 338) ménagée dans la bague (28).

## Patentansprüche

1. Karabiner bestehend aus einem Metallkörper (12) in Form einer offenen Öse, einem Schließschnapper (18) montiert drehbar um eine Gelenkachse (16) die sich an einem der Enden des Körpers (12) befindet, einer Feder die den Schnapper (18) zum schließen der Öse dürch Einführen in das andere Ende des Körpers (12), und einer Hülse (28) zum Verriegeln, welche am Schnapper (18) verschoben werden kann, um sei es eine nicht aktive Position zu haben welche erlaubt den Schnapper zum Inneren der Öse zu drehen um die Öse des Karabiners (10, 100, 200, 300) zu öffnen, oder eine aktive des Blockierens des Schnappers (18) hervorzurufen um den Karabiner in einer geschlossenen Position zu verriegeln, wobei der Übergang von der Position "nicht aktif" zur Position "akrif" durch manueles Verschieben der Hülse (28) gesicht, dadurch gekennzeichnet, daß der Karabiner (10, 100, 200, 300) eine Kennzeichnung (30, 130, 230, 330) trägt welche zeigt ob nun der Schnapper (18) verriegelt ist oder nicht , dieses mit Hilfe eines ersten Anhaltspunktes (32, 132, 232, 332) aus einer farbigen Oberfläche sichtbar in der nicht aktiven Position der Verriegelungshülse (28) und unsichtbar in der verriegelten aktiven Stellung der genannten Hülse (28), und daß dieser genannte erste Anhaltspunkt (32, 132, 232, 332) zum Teil die Seitenflächen des Schnappers (18) an dem, dem Gelenk (16) gegenüberliegendem Ende bedeckt und dieses in der Weise, daß er von der Hülse (28) automatisch verdeckt wird wenn diese in die aktive Stellung gebracht wird.

2. Karabiner nach Anspruch 1, dadurch gekennzeichnet, daß die Kennzeichnung (30, 130, 230, 330) einen zweiten Anhaltspunkt (34, 134, 234, 334) hat, der in der aktiven Position der Verriegelungshülse (28) sichtbar ist und der nicht aktiven Position der genannten Hülse nicht sichtbar ist.

3. Karabiner nach Anspruch 2, dadurch gekennzeichnet daß sich der zweite Anhaltspunkt (34, 134) im Mittelbereich des Schnappers (18), zwischen Gelenkachse (16) und dem gegenüberliegendem, Ende des Schappers (18) befindet.

4. Karabiner nach Anspruch 2 oder 3, dadurch gekennzeichnet daß die Farbbeschichtung des ersten Anhaltspunktes (32, 132, 232, 332) anders ist als die des Schnappers (18) und/oder die des zweiten Anhaltspunktes (34, 134, 234, 334)

5. Karabiner nach Anspruch 1 oder 2, dadurch gekennzeichnet, daß jeder Anhaltspunkt (232, 234, 332, 334) der Kennzeichnung (200, 300) durch ein Fenster (236, 336, 338) in der Hülse (28) sichtbar ist.

## Claims

1. A karabiner comprising a metal body (12) in the form of an open loop, a closing finger (18) pivotally mounted on an articulation spindle (16) located at one of the ends of the body (12), a return spring urging the finger (18) into engagement with the opposite end of the body (12) to close the loop, and a locking ring (28) which can be moved on the finger (18) to occupy either an inactive position allowing pivoting of the finger (18) towards the inside of the loop to open the loop of the karabiner (10, 100, 200, 300) and an active locking position of the finger (18) to lock the karabiner in the closed position, switching from the inactive position to the active position, and vice-versa, being performed by a manual control moving the ring (28), characterized in that the karabiner (10, 100, 200, 300) comprises a display device (30, 130, 230, 330) of the locked or not locked state of the closing finger (18), comprising a first indicator (32, 132, 232, 332) formed by a coloured coating arranged to be visible in the inactive position of the locking ring (28), and invisible in the active position of said ring, and that said first indicator (32, 132, 232, 332) partially covers the side branches of the finger (18) opposite from the articulation spindle (16) so as to be automatically hidden by the ring (28) when it moves to the active position.

2. The karabiner according to claim 1, characterized in that the display device (30, 130, 230, 330) is provided with a second indicator (34, 134, 234, 334) arranged to be visible in the active position of the locking ring (28) and invisible in the inactive position of said ring.

3. The karabiner according to claim 2, characterized in that the second indicator (34, 134) is located in the mid-zone of the finger (18) between the articulation spindle (16) and the opposite end of the finger (18).

4. The karabiner according to claim 2 or 3, characterized in that the colour of the coating constituting the first indicator (32, 132, 232, 332) is different from that of the finger (18) and/or of the second indicator (34, 134, 234, 334).

5. The karabiner according to claim 1 or 2, characterized in that each indicator (232, 234, 332, 334) of the display device (200, 300) is visible through a window (236, 336, 338) arranged in the ring (28).

**FIG : 1**

**10**

12
26
20
14
32
30
28
18
16

↓F2

**FIG : 2**

**10**

12
22;24
26
14
28
34
18
16

↑F1

FIG : 3

100

FIG : 4

100

**200**

**FIG : 5**

**FIG : 6**

**FIG : 7**

**300**

**FIG : 8**